# EUROPEAN PATENT APPLICATION

(11) **EP 4 633 017 A1**
(43) Date of publication of application: **15.10.2025**
(21) Application number: 24169810.9
(22) Date of filing: 11.04.2024
(51) Int. Cl.: H02M 1/00, H02M 11/00

(54) **CONTROL BOARD AND ASSOCIATED DISTRIBUTED CONTROL SYSTEM, POWER CONVERTER AND METHOD**

(71) Applicant: GE Energy Power Conversion Technology Limited, Rugby, Warwickshire CV21 1BD (GB)
(72) Inventor: Franck, TERRIEN, 90000 BELFORT (FR); SIHLER, Christof, 90000 BELFORT (FR); RICHARD, Stéphane, 91140 VILLEBON SUR YVETTE (FR)
(74) Representative: Casalonga

(57) **Abstract**

A control board (40) for a distributed control system for power converter is proposed.

The control board (40) is configured to be connected to a power module (41) and is configured to be connected to a controller board.

The control board comprises a processing unit (42) configured to command the power module (41) from references received from the controller board, a set of voltage measurements delivered by the power module (41) and data received from the power module (41), and to deliver data to the controller board.

## Description

The present invention concerns power converts and relates more particularly to control systems for such power converters to control the switches of the power converters.

The present invention relates to a distributed control system for a power converter, a submodule and a control board for such a control system.

The present invention also relates to a method for controlling a power converter.

A power controller, such as a modular multilevel power converter MMC, comprises a plurality of submodules serially connected in phase legs which may comprise arms.

Each submodule comprises, in the form of a half-bridge (also known as monopolar) or full-bridge (also known as H-bridge or bipolar) circuit, a capacitor for storing energy and power semiconductor switches which may be transistors.

Each submodule is connected to a power board interface.

The power board interfaces of the submodules arranged in an arm are connected to an arm controller.

The arm controllers of the power converter are connected to a central controller.

The arrangement of the submodules, power board interfaces, arm controllers and central controller form a centralized control system of the power controller.

The central controller provides individual control commands to each submodule within each control cycle.

To control all the submodules, the central controller receives signals delivered by each submodule, for example voltage measurements and delivers control signals to each submodule through the arm controllers and power interface boards so that greater the number of submodules is, more the complexity of the centralized control system is.

Further, as the number of signals received and delivered by the central controller increases with the number of submodules, the centralized control system and more particularly the central controller must be quick enough to process the signals received from the submodules and deliver the control commands.

It is therefore proposed to overcome wholly or partially these disadvantages.

In view of the foregoing the invention proposes a control board for a distributed control system for a power converter.

The control board is configured to be connected to a power module and is configured to be connected to a controller board.

The control board comprises a processing unit configured to command the power module from references received from the controller board, a set of voltage measurements delivered by the power module and data received from the power module, and to deliver data to the controller board.

Preferably, the control board further comprises a communication interface configured to be connected to a communication interface of another control board as defined above.

Advantageously, the control board comprises an identification circuit configured to identify the power module.

Preferably, the control board comprises an authentication module configured to authorize the reception of instructions from the controller board after the reception of a valid authentication code by the authentication module, the authentication code being delivered by the controller board.

Preferably, the control board further comprises an encrypting circuit configured to encrypt the data, the processing unit being configured to deliver the encrypted data to the controller board.

Another object of the invention relates to a submodule comprising a control board as defined above and a power module.

Advantageously, the power module comprises a full bridge including a first terminal, a second terminal, a first arm and a second arm, each arm comprising two switching cells in series, first ends of the first and second arms being connected together and to a first end of a capacitor, second ends of the first and second arms being connected together and to a second end of the capacitor, the first terminal being between the switching cells of the first arm and the second terminal being between the switching cells of the second arm, the set of voltage measurements comprising a first voltage measurement between the first and second ends of the capacitor, a second voltage measurement between the first terminal and the second end of the capacitor and a third voltage measurement between the second terminal and the second end of the capacitor, the data comprising a switching state of each switching cell.

Preferably, the power module comprises a half bridge including a first terminal, a second terminal, a first arm comprising two switching cells in series, a first end of the first arm being connected to a first end of a capacitor, a second end of the first arm being connected to a second end of the capacitor, the first terminal being between the switching cells of the first arm and the second terminal being connected to the first end of the capacitor, the set of voltage measurements comprising a first voltage measurement between the first and second ends of the capacitor and a second voltage measurement between the first and second terminals, the data comprising a switching state of each switching cell.

Advantageously, the power module further comprises a bypass switch connecting the first and second terminals, the communication interface being configured to command the bypass switch.

Another object of the invention relates to a distributed control system for power converter comprising:
- a first central controller configured to deliver instructions,
- a first power interface board connected to the first central controller, and configured to determine first references from the instructions delivered by the first central controller and to deliver first references,
- a first controller board connected to the first power interface board, and configured to determine second references from the first references and to deliver the second references,
- a first communication board connected to the first controller board and configured to deliver the second references, and
- a plurality of submodules as defined above, each submodule being connected to the first communication board to receive the second references.

Preferably, the distributed control system further comprises:
- a second central controller configured to deliver instructions and connected to the first central controller,
- a second power interface board configured to be connected to the second central controller, and configured to determine third references from the instructions delivered by the second central controller and to the deliver third references,
- a second controller board connected to the second power interface board, and configured to determine fourth references from the third references and to deliver the fourth references,
- a second communication board connected to the second controller board and configured to deliver the fourth references,
- each submodule of the plurality of submodules being further connected to the second communication board to receive the fourth references.

Another object of the invention relates to a method for controlling a power converter comprising a distributed control system including:
- a first central controller,
- a first power interface board connected to the central controller,
- a first controller board connected to the first power interface board,
- a first communication board connected to the first controller board, and
- a plurality of submodules, each submodule being connected to the first communication board, each submodule being as defined above.

The method comprises:
- receiving instructions by the first power interface board, the instructions being delivered by the first central controller,
- delivering first references by the first power interface board to the first controller board, the first references being determined by the first power interface board from the instructions,
- delivering second references by the first controller board to the first communication board, the second references being determined by the first controller board from the first references,
- delivering the second references to each submodule connected to the first communication board,
- for each submodule, controlling by the processing unit of the said submodule the associated power module from the second references, a set of voltage measurements delivered by the power module of the said submodule and data received from the power module of the said submodule, and
- delivering data to the central controller through the first power interface, the first controller board and the first communication board.

Preferably, the control board of a first submodule of the plurality of submodules comprises a communication interface connected to the communication interface of the control board of a primary submodule as defined above, the bypass switch being open, the control board of the primary submodule being connected to the first communication board, the method comprising:
- generating a closing signal by the processing unit of the first submodule when a fault of the primary submodule is detected,
- delivering the closing signal to the communication interface of the first submodule, and
- closing the switch of the primary submodule when the communication interface of the primary submodule receives the closing signal.

Other characteristics and advantages of the invention will emerge on reading the following description of embodiments of the invention, provided solely by way of non-limiting examples and with reference to the drawings in which:
Figure 1 illustrates schematically an example of a system for converting power according to the invention,
Figure 2 illustrates schematically an example of a power converter according to the invention,
Figure 3 illustrates schematically a first example of a distributed control system according to the invention,
Figure 4 illustrates schematically an example of a submodule according to the invention,
Figure 5 illustrates schematically a first example of a power module according to the invention,
Figure 6 illustrates schematically a second example of the power module according to the invention,
Figure 7 illustrates schematically an example of a method implementing the distributed control system according to the invention, and
Figure 8 illustrates schematically a second example of a distributed control system according to the invention.

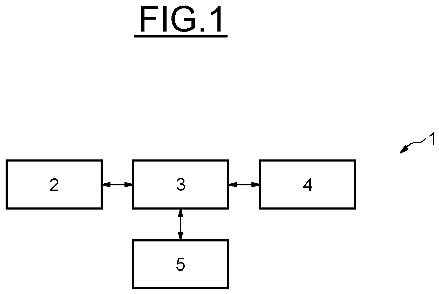

Figure 1 illustrates schematically an example of a system 1 for converting power.

The system 1 includes a source 2, a power converter 3, and a source/load 4. The term source, as used herein, refers to a renewable power source, a non-renewable power source, a generator, a grid, a fuel cell, an energy storage (when discharged), and the like. Also, the term load, as used herein, may refer to a motor, an electrical appliance, an energy storage (when re-charged) and the like.

In addition, the power converter 4 may be a modular multilevel power converter MMC. In one embodiment, the source 2 may be operatively coupled to a first terminal (not shown) of the power converter 3. A second terminal (not shown) of the power converter 3 may be operatively coupled to the source/load 4. The first terminal and the second terminal may be alternatively employed as an input terminal or an output terminal of the power converter 3.

The system 1 further includes a distributed control system 5. The distributed control system 5 is intended to control the operation of the power converter 3.

The distributed control system 5 may be configured to control the operation of the power converter 3 by controlling switching of a plurality of semiconductor switches and submodules (SMs) within the power converter 3.

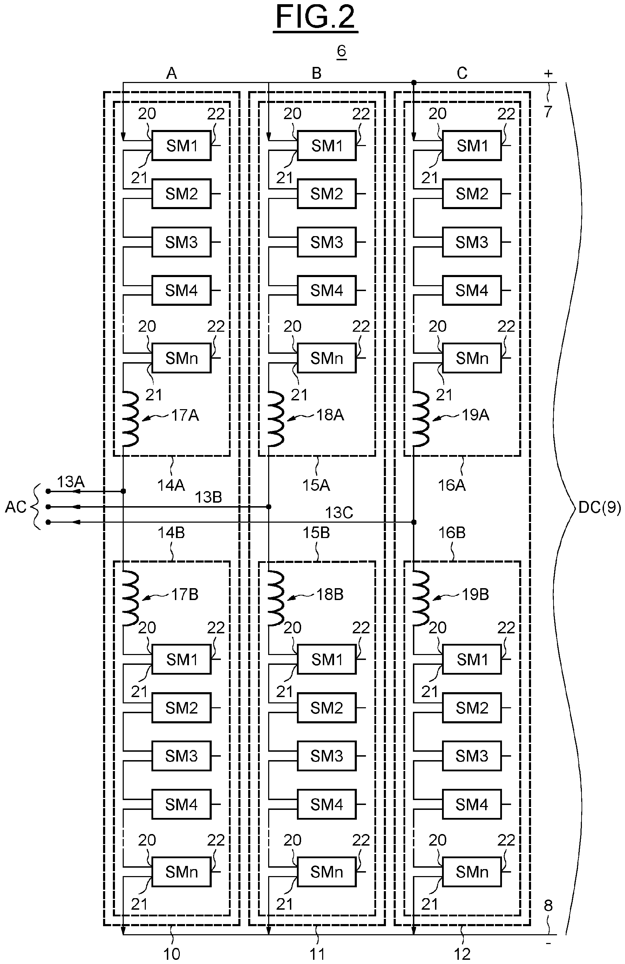

Figure 2 illustrates schematically an example of the power converter 4 comprising an MMC 6, using a plurality of SMs connected in series named SMn, n being an integer.

The submodules SMs are identical.

The MMC 6 may have an ABC 3-phase structure including positive and negative DC voltage rails 7 and 8, respectively. The positive and negative rails 7 and 8 form DC terminals 9.

Each of the 3-phases (A, B, and C) corresponds to one of phase legs 10, 11 and 12. The phase legs 10, 11 and 12 are connected to AC terminals 13A, 13B and 13C, respectively.

Each phase leg 10, 11, 12 may include an upper arm 14A, 15A and 16A and an identical lower arm 14B, 15B and 16B.

Each arm of the upper and lower arms 14A 14B, 15B, 16B include an arm inductor 17A, 17B, 18A, 18B, 19, 19B for current suppression and a plurality of submodules SMs.

Each submodule SM1 to SMn comprises a first terminal 20, a second terminal 21 and a control terminal 22.

The plurality of submodules SMs of each upper and lower arms are connected in series so that the first terminal 20 of a submodules SM is connected to the second terminal 21 of another submodules SM.

The first terminal 20 of the plurality of submodules SM of each upper arm 14A, 15A, 16A not connected to a second terminal 21 of a submodule SM, is connected to the positive DC voltage rail 7.

The second terminal 21 of the plurality of submodules SM of each upper arm 14A, 15A, 16A not connected to a first terminal 20 of a submodule SM, is connected to a first end of the arm inductor 17A, 18A, 19A of the said upper arm.

The second end of the arm inductor 17A of the upper arm 14A of a first phase leg 10 is connected to a first AC terminal 13A, the second end of the arm inductor 18A of the upper arm 15A of a second phase leg 11 is connected to a second AC terminal 13B and the second end of the arm inductor 19A of the upper arm 16A of the third phase leg 12 is connected to the third AC terminal 13C.

The second terminal 21 of the plurality of submodules SM of each lower arm 14B, 15B, 16B not connected to a first terminal 20 of a submodule SM, is connected to the negative DC voltage rail 8.

The first terminal 21 of the plurality of submodules SM of each lower arm 14B, 15B, 16B not connected to a second terminal 21 of a submodule SM, is connected to a first end of the arm inductor 17B, 18B, 19B of the said lower arm.

The second end of the arm inductor 17B of the lower arm 14B of the first phase leg 10 is connected to the first AC terminal 13A, the second end of the arm inductor 18B of the lower arm 15B of the second phase leg 11 is connected to the second AC terminal 13B and the second end of the arm inductor 19B of the lower arm 16B of the third phase leg 12 is connected to the third AC terminal 13C.

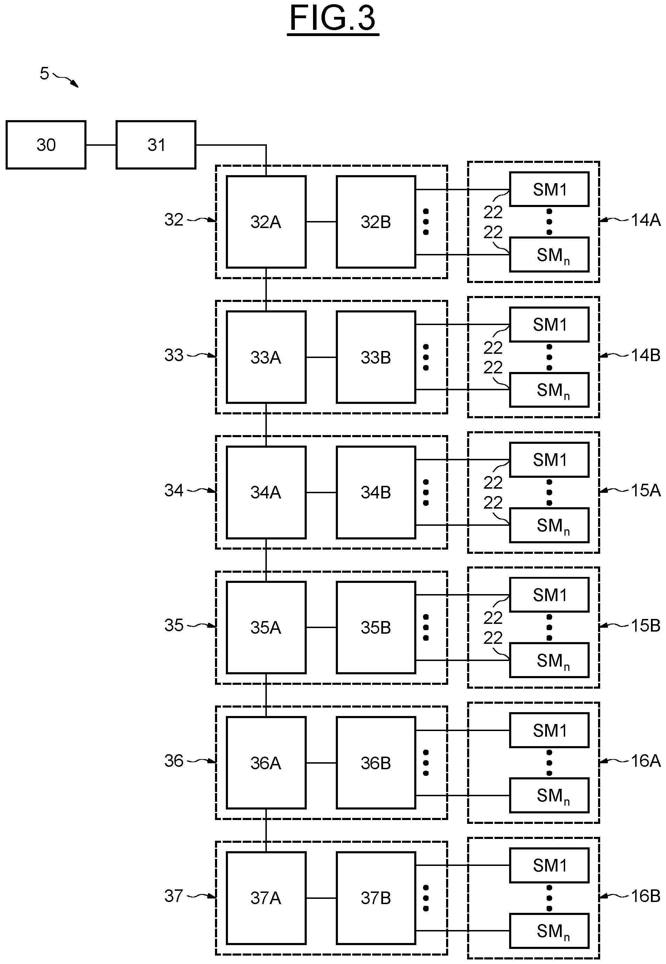

Figure 3 illustrates schematically a first example of the distributed control system 5.

The distributed control system 5 comprises a central controller 30, a power interface board 31 (or grid power interface board) connected to the central controller 30 and control arms 32, 33, 34, 35, 36 (or valve power interface board) in series.

The number of control arms may be equal to the number of upper and lower arms of the converter 6.

Each control arm 32, 33, 34, 35, 36 is connected to the control terminal 22 of each submodule SM of an upper or lower arm of a phase leg 10, 11, 12.

Each control arm 32, 33, 34, 35, 36 comprises a first controller board 32A, 33A, 34A, 35A, 36A, 37A and a first communication board 32B, 33B, 34B, 35B, 36B, 37B connected to the controller board 32A, 33A, 34A, 35A, 36A, 37A of the said control arm.

The first controller board 32A of a first control arm 32 is connected to the power interface board 31A and to the first controller board 33A of a second control arm 33.

The first controller board 34A of a third control arm 34 is connected to the first controller board 33A of the second control arm 33 and the first controller board 35A of a fourth control arm 35.

The first controller board 36A of a fifth control arm 36 is connected to the first controller board 35A of the fourth control arm 35 and the first controller board 37A of a sixth control arm 37.

The first communication board 32B of the first control arm 32 is connected to the control terminal 22 of the submodules SM1 to SMn of the upper arm 14A of the first phase leg 10, n being an integer.

The second communication board 33B of the second control arm 33 is connected to the control terminal 22 of the submodules SM1 to SMn of the lower arm 14B of the first phase leg 10.

The first communication board 34B of the third control arm 34 is connected to the control terminal 22 of the submodules SM1 to SMn of the upper arm 15A of the second phase leg 11.

The second communication board 35B of the fourth control arm 35 is connected to the control terminal 22 of the submodules SM1 to SMn of the lower arm 15B of the second phase leg 11.

The first communication board 36B of the fifth control arm 36 is connected to the control terminal 22 of the submodules SM1 to SMn of the upper arm 16A of the third phase leg 12.

The second communication board 37B of the sixth control arm 37 is connected to the control terminal 22 of the submodules SM1 to SMn of the lower arm 16B of the third phase leg 12.

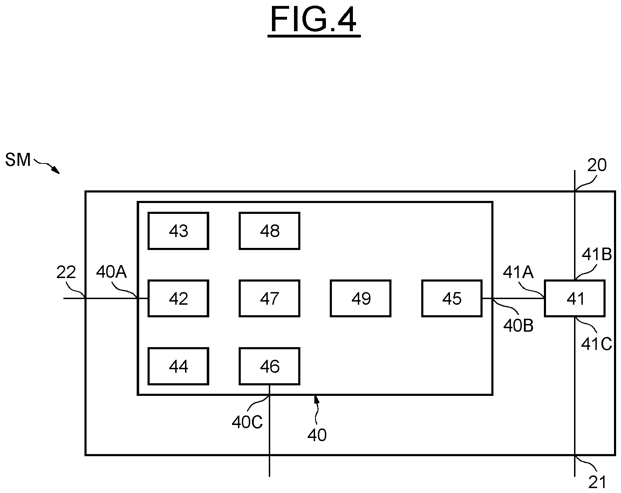

Figure 4 illustrates an example of a submodule SM.

The submodule SM comprises a control board 40 and a power module 41.

The control board 40 comprises a first terminal 40A connected to the control terminal 22 of the submodule SMn, a second terminal 40B connected to a command terminal 41A of the power module 41.

The control board 40 further comprises a processing unit 42, a memory 43, a first interface 44 connected to the first terminal 40A, a second interface 45 connected to the second terminal 40B.

The control board 40 may further comprise a communication interface 46 connected to a third terminal 40C of the control board 40 to connect the control board 40 to the communication board of the control board of another submodule of the plurality of submodules connected to the same first communication board.

The control board 40 may further comprise an identification circuit 47 intended to identify the power module 41.

The control board 40 may further comprise an authentication module 48 intended to authorize the reception of instructions from the first controller board connected to the control terminal 22 of the submodule SMn after the reception of a valid authentication code delivered by the said controller board.

The control board 40 may further comprise an encrypting circuit 49 intended to encrypt data.

The encrypting circuit 49 may implement algorithm using an advanced encryption standard (AES) symmetric cypher with 256-bit long keys and adding authentication tags, for example the Secure Hash Algorithm (SHA-256).

The power module 41 further comprises a first terminal 41B connected to the first terminal 20 of the submodule SMn and a second terminal 41C connected to the second terminal 21 of the submodule SMn.

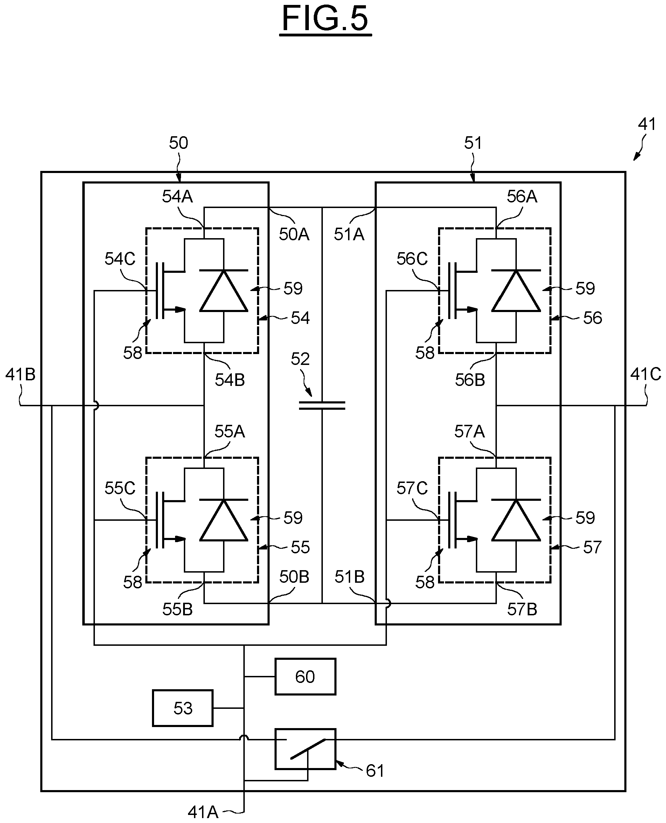

Figure 5 illustrates a first example of the power module 41.

The power module 41 comprises a full bridge comprising a first arm 50, a second arm 51 and a capacitor 52.

The power module 41 further comprises a voltage sensor 53.

The first arm 50 comprises a first end 50A connected to a first end of the capacitor 52 and to a first end 51A of the second arm 51.

The first arm 50 comprises a second end 50B connected to a second end of the capacitor 52 and to a second end 51B of the second arm 51.

The first arm 50 comprises two switching cells 54, 55 in series and the second arm 51 comprises two switching cells 56, 57 in series.

Each switching cell 54, 55, 56, 57 comprises a first end 54A, 55A, 56A, 57A, a second end 54B, 55B, 56B, 57B and command terminal 54C, 55C, 56C, 57C.

Each switching cell 54, 55, 56, 57 further comprises a transistor 58 and a diode 59.

The transistor 58 is for example an Insulated Gate Bipolar Transistor IGBT.

The collector of the transistor 58 and the cathode of the diode 59 are connected to the first end 54A, 55A, 56A, 57A of the switching cell 54, 55, 56, 57.

The emitter of the transistor 58 and the anode of the diode 59 are connected to the second end 54B, 55B, 56B, 57B of the switching cell 54, 55, 56, 57, and the gate of the transistor 58 is connected to the command terminal 41A of the power module 41.

The first end 54A of a first switching cell 54 is connected to the first end 50A of the first arm 50, the second end 55A of a second switching cell 54 is connected to the second end 50B of the first arm 50.

The second end 54B of the first switching cell 54 and the first end 55A of the second switching cell 55 are connected to the first terminal 41B of the power module 41.

The first end 56A of a third switching cell 56 is connected to the first end 51A of the second arm 51, the second end 57A of a fourth switching cell 57 is connected to the second end 51B of the second arm 51.

The second end 56B of the third switching cell 56 and the first end 57A of the fourth switching cell 57 are connected to the second terminal 41C of the power module 41.

The voltage sensor 53 connected to the command terminal 41A of the power module 41, is intended to deliver a set of voltage measurements.

The set of voltage measurements comprises a first voltage measurement between the first and second ends of the capacitor 52, a second voltage measurement between the first terminal 41B of the power module 41 and the second end of the capacitor 52, and a third voltage measurement between the second terminal 41C of the power module 41 and the second end of the capacitor 52.

A logic circuit 60 connected to the command terminal 41A of the power module 41 deliver data comprising the switching state of each switching cell 54, 55, 56, 57.

The power module 41 may further comprise a bypass switch 61 connecting the first and second terminals 41B, 41C of the power module 41.

The bypass switch 61 comprises a command input 61A connected to the command terminal 41A of the power module 41.

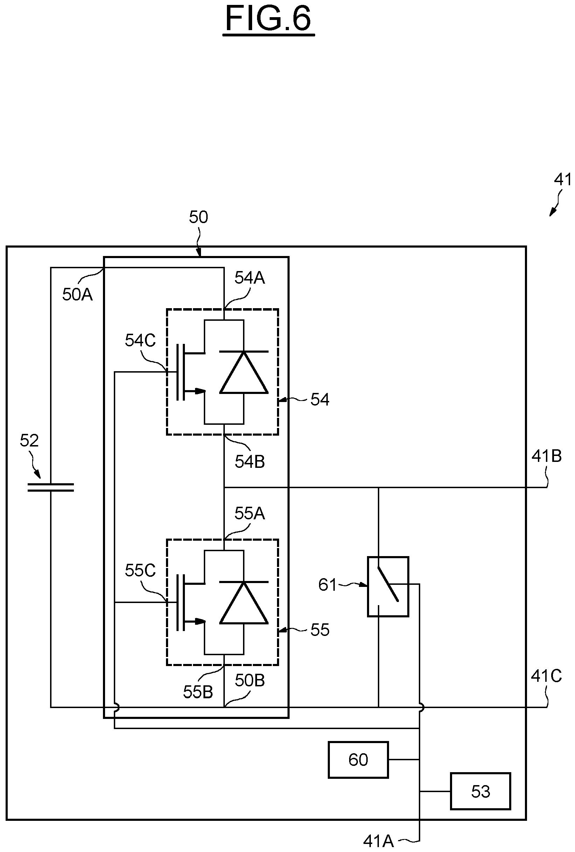

Figure 6 illustrates a second example of the power module 41.

The power module 41 comprises a half bridge comprising the first arm 50, the capacitor 52, the voltage sensor 53 connected to the command terminal 41A of the power module 41 and the logic circuit 60 connected to the command terminal 41A of the power module 41.

The first end 50A of the first arm 50 is connected to the first end of the capacitor 52, the second end 50B of the first arm 50 is connected to the second end of the capacitor 52 and to the second terminal 41C of the power module 41, and the second end 54B of the first switching cell 54 and the first end 55A of the second switching cell 55 are connected to the first terminal 41B of the power module 41.

The voltage sensor 53 is intended to deliver a set of voltage measurements comprising a first voltage measurement between the first and second ends of the capacitor 52, and a second voltage measurement between the first and second terminals 41B, 41C of the power module 41.

The power module 41 may further comprise the bypass switch 61 connecting the first and second terminals 41B, 41C of the power module 41.

The connections between the central controller 30 and the power interface board 31, between the power interface board 31 and the control board, between the control boards, between the control boards and the communication boards and between the communication boards and the power modules are wired connections.

The wired connections may be optic fibers.

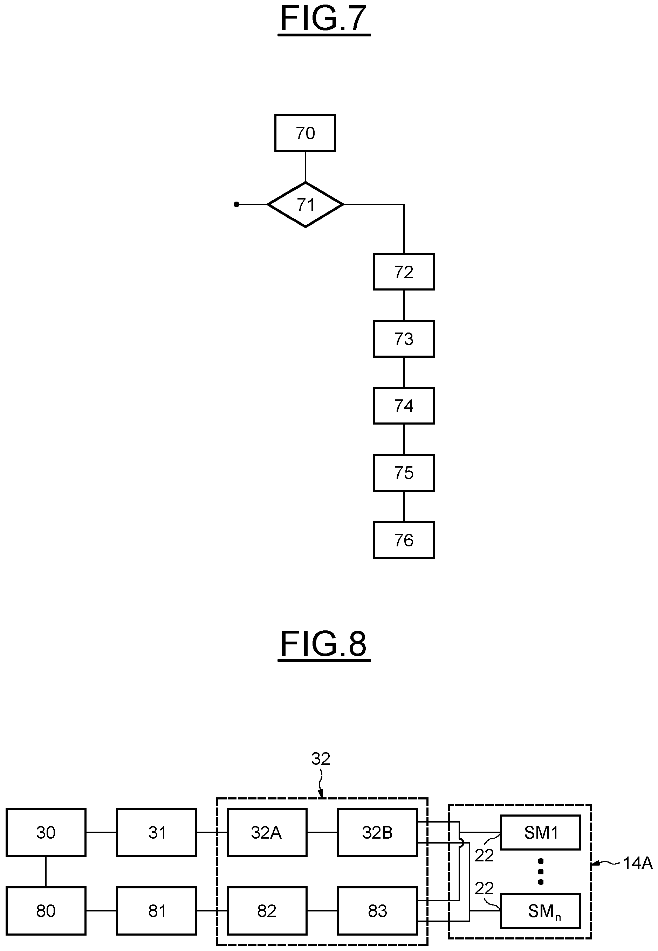

Figure 7 illustrates schematically an example of a method implementing the distributed control system 5 to control the MMC 3.

During an initializing step 70, the identification circuit 47 of the control board 40 of each submodule SM identifies the power module 41 connected to the said control board 40.

The identification circuit 47 may compare an identifier of the said power module 41 with a reference identifier stored for example in the memory 43.

The authentication module 48 of the control board 40 of each submodule SM may compare an authentication code received from the first controller board connected to the said submodule SM with a reference code stored for example in the memory 43.

If the authentication code is identical to the reference code, the authentication is valid and the authentication module 48 authorizes the reception of instructions by the control board 40 from the first controller board, and if the identifier is identical to the reference identifier, the power module 41 is activated by the control board 40 so that the power module 41 controls the power module 41 (step 71), and the method goes to a step 72.

Each power module 41 comprises a different identifier.

If the authentication code is not identical to the reference code or the identifier is not identical to the reference identifier (step 71), the method stops and the power converter 3 is off.

The comparison of the identifier and the reference identifier permits to detect if a power module 41 is connected to the corresponding control board 40 to avoid assembly errors of the submodule SM.

The comparison of the authentication code and the reference authentication code permits to detect if a submodule is connected to the corresponding first control board to avoid assembly errors of the distributed control system 5.

Of course, if a control board 40 does not comprise the authentication module 48 and the identification circuit 47, the method starts at step 72.

If a control board 40 comprises only the authentication module 48 or the identification circuit 47, step 70 is adapted.

During the step 72, the distributed control system 5 is operational to control the MMC 3.

The central controller 30 delivers instructions to command the MMC 3.

The instructions comprise for example voltage reference values for the phase legs 10, 11, 12.

During a step 73, the power interface board 31 determines first references comprising for example phase leg voltage references from the instructions and a control algorithm stored in a memory of the power interface board 31.

The power interface board 31 further comprises an interface delivering the phase leg voltage references to the first controller board 32A, 33A, 34A, 35A, 36A, 37A.

During a step 74, each first controller board 32A, 33A, 34A, 35A, 36A, 37A determines second references from the first references and a control algorithm stored in a memory of the said first controller board.

The second references comprise for example direct current DC voltage reference values for the submodules SML.SMn.

The voltage reference is delivered to the first communication board connected to the said first controller board and the said first communication board delivers the voltage reference to the submodules SM connected to the said first communication board.

During a step 75, the first interface 44 of each submodule receive the second references transmitted by the communication board connected to the said submodule.

During a step 76, the processing unit 42 of each submodule determines control instructions from the received second references, the set of voltage measurements received from the sensor 53 of the power module connected to the said submodule and data from the logic circuit 60 of the said power module.

The memory 43 of each submodule comprises an algorithm to command the power module, the algorithm being implemented by the processing unit 42.

The processing unit 42 of each submodule further delivers data to the central controller 30 through the first power interface, the first controller board and the first communication board.

The data delivered by the processing unit 42 to the central controller 30 may be encrypted by the encrypting circuit 49 and may comprise diagnostic data to identify for example a defect power module.

The processing unit 42 of each submodule manages the power module connected to the said submodule so that the power modules are not manage by the central controller 30.

Each power module is controlled locally by the control board 40 connected to the said power module reducing the complexity of the control system of the MMC 3.

Each control board 40 receives the set of measurements, the data comprising the state of switching and determines the control instructions commanding the switching cells of the power module connected to the said control board so that the control system of the MMC 3 is further quicker than a centralized control system known from the prior art.

Further, when the control boards 40 of a first and a primary submodules connected to the same first communication board, are connected together through the third terminal 40C, and the control board 40 of the first or primary submodule has a fault, the power module of the defaulting submodule comprising the bypass switch 61, the processing unit 42 of the control board 40 of the other submodule or functional submodule may generate a closing signal by the processing unit of the functional submodule and the communication interface of the functional submodule delivers the closing signal to the communication interface of the defaulting submodule to close the bypass switch 61.

As the closing signal is generated by a submodule connected to the defaulting submodule, the closing signal is quickly generated and transmitted to the defaulting submodule to bypass the defaulting submodule so that the MMC3 continues to operate.

The defaulting submodule is bypassed quicker as in a centralized control system known from the prior art.

Figure 8 illustrates schematically a second example of the distributed control system 5.

In this example, the distributed control system 5 comprises a second central controller 80, a second power interface board 81 connected to the second central controller 80, and each control arm 32, 33, 34, 35, 36 comprises a second controller board and a second communication board connected to the second controller board of the said control arm.

The plurality of submodules of each control arm are further connected to the second communication board of the said control arm.

The second controller boards and the second power interface board 81 are connected in series.

For clarity reasons, figure 8 illustrates the central controller or first central controller 30, the power interface board 31 or first power interface board 31, the first control arm 32 and the upper arm 14A, the second central controller 80, the second power interface board 81.

The first control arm 32 comprises the first controller board 32A, the first communication board 32B, the second controller board 82 and the second communication board 83.

The first central controller 30 is connected to the first power interface board 31 and to the second central controller 80.

The first central controller 30 and the second central controller 80 are connected together to ensure that the instructions delivered by the first and second central controllers 38, 80 are identical and synchronized.

The second central controller 80 is further connected to the second power interface board 81.

The first controller board 32A is connected to the first power interface board 31 and to the first communication board 32B.

The first communication board 32B is connected to the control terminal 22 of the submodule of the upper arm 14A.

The second controller board 82 is connected to the second power interface board 81 and to the second communication board 83.

The second communication board 83 is connected to the control terminal 22 of the submodule of the upper arm 14A.

The distributed control system is redundant in a simple way to ensure hot control redundancy.

In case of a failure of a central controller, a power control interface, a controller board, a communication board or a connection, the defaulting component may be replaced without stopping the MMC 3 increasing the availability of the MMC 3.

## Claims

1. Control board (40) for a distributed control system (5) for power converter (3), the control board (40) being configured to be connected to a power module (41) and being configured to be connected to a controller board (32A, 33A, 34A, 35A, 36A, 37A), **characterized in that** the control board comprises a processing unit (42) configured to command the power module (41) from references received from the controller board (32A, 33A, 34A, 35A, 36A, 37A), a set of voltage measurements delivered by the power module (41) and data received from the power module (41), and to deliver data to the controller board.

2. Control board according to claim 1, further comprising a communication interface (46) configured to be connected to a communication interface of another control board according to claim 1.

3. Control board according to claim 1 or 2, comprising an identification circuit (47) configured to identify the power module (41).

4. Control board according to any one of claims 1 to 3, further comprising an authentication module (48) configured to authorize the reception of instructions from the controller board (32A, 33A, 34A, 35A, 36A, 37A) after the reception of a valid authentication code by the authentication module, the authentication code being delivered by the controller board.

5. Control board according to any one of claims 1 to 4, further comprising an encrypting circuit (49) configured to encrypt the data, the processing unit being configured to deliver the encrypted data to the controller board (32A, 33A, 34A, 35A, 36A, 37A).

6. Submodule (SM) comprising a control board (40) according to any one of claims 1 to 5 and a power module (41).

7. Submodule according to claim 6, wherein the power module (41) comprising a full bridge including a first terminal (41B), a second terminal (41c), a first arm (50) and a second arm (51), each arm comprising two switching cells (54, 55, 56, 57) in series, first ends (51A, 51A) of the first and second arms being connected together and to a first end of a capacitor (52), second ends (50B, 51B) of the first and second arms being connected together and to a second end of the capacitor, the first terminal (41B) being between the switching cells (54, 55) of the first arm (50) and the second terminal (41C) being between the switching cells (56, 57) of the second arm (51), the set of voltage measurements comprising a first voltage measurement between the first and second ends of the capacitor, a second voltage measurement between the first terminal and the second end of the capacitor and a third voltage measurement between the second terminal and the second end of the capacitor, the data comprising a switching state of each switching cell (54, 55, 56, 57).

8. Submodule according to claim 6, wherein the power module (41) comprising a half bridge including a first terminal (41B), a second terminal (41C), a first arm (50) comprising two switching cells (54, 55) in series, a first end (50A) of the first arm being connected to a first end of a capacitor (52), a second end (50B) of the first arm being connected to a second end of the capacitor, the first terminal (41B) being between the switching cells (54, 55) of the first arm and the second terminal (41C) being connected to the first end of the capacitor (52), the set of voltage measurements comprising a first voltage measurement between the first and second ends of the capacitor and a second voltage measurement between the first and second terminals, the data comprising a switching state of each switching cell.

9. Submodule according to claim 7 or 8, wherein the power module (41) further comprises a bypass switch (61) connecting the first and second terminals (41B, 41C), the communication interface (46) being configured to command the bypass switch.

10. Distributed control system (5) for power converter (3) comprising:
- a first central controller (30) configured to deliver instructions,
- a first power interface board (31) connected to the first central controller, and configured to determine first references from the instructions delivered by the first central controller (30) and to deliver first references,
- a first controller board (32A, 33A, 34A, 35A, 36A, 37A) connected to the first power interface board, and configured to determine second references from the first references and to deliver the second references,
- a first communication board (32B, 33B, 34B, 35B, 36B, 37B) connected to the first controller board and configured to deliver the second references, and
- a plurality of submodules (SM1, SMn) according to any one of claims 6 to 9, each submodule being connected to the first communication board to receive the second references.

11. Distributed control system according to claim 10, further compri sing:
- a second central controller (80) configured to deliver instructions and connected to the first central controller (30),
- a second power interface board (81) configured to be connected to the second central controller (80), and configured to determine third references from the instructions delivered by the second central controller (80) and to the deliver third references,
- a second controller board (82) connected to the second power interface board, and configured to determine fourth references from the third references and to deliver the fourth references,
- a second communication board (83) connected to the second controller board and configured to deliver the fourth references,
- each submodule (SM1, SMn) of the plurality of submodules being further connected to the second communication board to receive the fourth references.

12. Method for controlling a power converter (3) comprising a distributed control system (5) including:
- a first central controller (30),
- a first power interface board (31) connected to the central controller,
- a first controller board (32A, 33A, 34A, 35A, 36A, 37A) connected to the first power interface board,
- a first communication board (32B, 33B, 34B, 35B, 36B, 37B) connected to the first controller board, and
- a plurality of submodules (SM1, SMn), each submodule being connected to the first communication board, each submodule being according to any one of claims 6 to 9,
the method comprising:
- receiving instructions by the first power interface board (31), the instructions being delivered by the first central controller (30),
- delivering first references by the first power interface board (31) to the first controller board (32A, 33A, 34A, 35A, 36A, 37A), the first references being determined by the first power interface board from the instructions,
- delivering second references by the first controller board (32A, 33A, 34A, 35A, 36A, 37A) to the first communication board (32B, 33B, 34B, 35B, 36B, 37B), the second references being determined by the first controller board from the first references,
- delivering the second references to each submodule (SM1, SMn) connected to the first communication board (32B, 33B, 34B, 35B, 36B, 37B),
- for each submodule (SM1, SMn), controlling by the processing unit (42) of the said submodule the associated power module from the second references, a set of voltage measurements delivered by the power module of the said submodule and data received from the power module of the said submodule, and
- delivering data to the central controller (30) through the first power interface (31), the first controller board (32A, 33A, 34A, 35A, 36A, 37A) and the first communication board (32B, 33B, 34B, 35B, 36B, 37B).

13. Method according to claim 12, wherein the control board (40) of a first submodule of the plurality of submodules comprises a communication interface (46) connected to the communication interface (46) of the control board of a primary submodule according to claim 9 depending on claim 2, the bypass switch (61) being open, the control board of the primary submodule being connected to the first communication board, the method comprising:
- generating a closing signal by the processing unit of the first submodule when a fault of the primary submodule is detected,
- delivering the closing signal to the communication interface of the first submodule, and
- closing the switch of the primary submodule when the communication interface of the primary submodule receives the closing signal.
